# EUROPEAN PATENT APPLICATION

(11) **EP 4 712 358 A1**
(43) Date of publication of application: **18.03.2026**
(21) Application number: 24807498.1
(22) Date of filing: 13.05.2024
(51) Int. Cl.: H04B 7/06, H04W 52/02, H04W 52/36, H04W 72/232

(54) **METHOD, USER EQUIPMENT, PROCESSING DEVICE, AND STORAGE MEDIUM FOR TRANSMITTING CHANNEL STATE INFORMATION REPORT, AND METHOD AND BASE STATION FOR RECEPTION OF CHANNEL STATE INFORMATION REPORT**

(30) Priority: 12.05.2023 KR 20230062060
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR)
(74) Representative: Plasseraud IP
(86) International application number: PCT/KR2024/006444
(87) International publication number: WO 2024/237627

(57) **Abstract**

This UE may: receive a CSI reporting configuration, the CSI reporting configuration comprising L CSI reporting sub-configurations, each of which comprises a list of CSI-resources, wherein L is an integer that is greater than 1; receive an indication for CSI reporting for N CSI reporting sub-configurations from among the L CSI reporting sub-configurations, wherein N is an integer that is not greater than L and is greater than 1; and transmit a CSI report including CSI sub-reports respectively corresponding to the N CSI reporting sub-configurations. Each of the CSI sub-reports includes a CSI-RS resource indicator (CRI) field on the basis of log₂(K_s), wherein K_s is the number of CSI-RS resources on the basis of the corresponding CSI reporting sub-configuration

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

As the number of services/user equipments (UEs) that a network needs to support increases rapidly, the needs for not only power saving for UEs but also energy saving for the network are gradually increasing.

One object of the present disclosure is to provide methods and procedures for network energy conservation.

Another object of the present disclosure is to provide a channel state information (CSI) report used for network energy saving without a mismatch between a base station (BS) and a UE.

Another object of the present disclosure is to reduce the decoding complexity of a CSI report at a BS.

The objects to be achieved with the present disclosure are not limited to what has been particularly described hereinabove and other objects not described herein will be more clearly understood by persons skilled in the art from the following detailed description.

### Technical Solution

In an aspect of the present disclosure, a method for transmitting a channel state information (CSI) report by a user equipment (UE) in a wireless communication system is provided. The method includes receiving a CSI report configuration including L CSI report sub-configurations, each including a list of CSI resources, where L is an integer greater than 1, receiving an indication of CSI reporting for N CSI report sub-configurations among the L CSI report sub-configurations, where N is an integer greater than 1 and not greater than L, and transmitting a CSI report including CSI sub-reports respectively corresponding to the N CSI report sub-configurations. Each of the CSI sub-reports includes a CSI reference signal (CSI-RS) resource indicator (CRI) field based on log₂(K_s), where K_s is the number of CSI-RS resources based on a corresponding CSI report sub-configuration.

In another aspect of the present disclosure, a UE for transmitting a CSI report in a wireless communication system is provided. The UE includes at least one transceiver, at least one processor, and at least one computer memory operably connected to the at least one processor and storing instructions which, when executed, cause the at least one processor to perform operations. The operations include receiving a CSI report configuration including L CSI report sub-configurations, each including a list of CSI resources, where L is an integer greater than 1, receiving an indication of CSI reporting for N CSI report sub-configurations among the L CSI report sub-configurations, where N is an integer greater than 1 and not greater than L, and transmitting a CSI report including CSI sub-reports respectively corresponding to the N CSI report sub-configurations. Each of the CSI sub-reports includes a CRI field based on log₂(K_s), where K_s is the number of CSI-RS resources based on a corresponding CSI report sub-configuration.

In another aspect of the present disclosure, a processing device in a wireless communication system is provided. The processing device includes at least one processor, and at least one computer memory operably connected to the at least one processor and storing instructions which, when executed, cause the at least one processor to perform operations. The operations include receiving a CSI report configuration including L CSI report sub-configurations, each including a list of CSI resources, where L is an integer greater than 1, receiving an indication of CSI reporting for N CSI report sub-configurations among the L CSI report sub-configurations, where N is an integer greater than 1 and not greater than L, and transmitting a CSI report including CSI sub-reports respectively corresponding to the N CSI report sub-configurations. Each of the CSI sub-reports includes a CRI field based on log₂(K_s), where K_s is the number of CSI-RS resources based on a corresponding CSI report sub-configuration.

In another aspect of the present disclosure, a computer-readable storage medium is provided. The storage medium includes receiving a CSI report configuration including L CSI report sub-configurations, each including a list of CSI resources, where L is an integer greater than 1, receiving an indication of CSI reporting for N CSI report sub-configurations among the L CSI report sub-configurations, where N is an integer greater than 1 and not greater than L, and transmitting a CSI report including CSI sub-reports respectively corresponding to the N CSI report sub-configurations. Each of the CSI sub-reports includes a CRI field based on log₂(K_s), where K_s is the number of CSI-RS resources based on a corresponding CSI report sub-configuration.

In another aspect of the present disclosure, a method for receiving a CSI report from a UE by a base station (BS) in a wireless communication system is provided. The method includes transmitting a CSI report configuration including L CSI report sub-configurations, each including a list of CSI resources, where L is an integer greater than 1, transmitting an indication of CSI reporting for N CSI report sub-configurations among the L CSI report sub-configurations, where N is an integer greater than 1 and not greater than L, and receiving a CSI report including CSI sub-reports respectively corresponding to the N CSI report sub-configurations. Each of the CSI sub-reports includes a CRI field based on log₂(K_s), where K_s is the number of CSI-RS resources based on a corresponding CSI report sub-configuration.

In another aspect of the present disclosure, a BS for receiving a CSI report from a UE in a wireless communication system is provided. The BS includes at least one transceiver, at least one processor, and at least one computer memory operably connected to the at least one processor and storing instructions which, when executed, cause the at least one processor to perform operations. The operations include transmitting a CSI report configuration including L CSI report sub-configurations, each including a list of CSI resources, where L is an integer greater than 1, transmitting an indication of CSI reporting for N CSI report sub-configurations among the L CSI report sub-configurations, where N is an integer greater than 1 and not greater than L, and receiving a CSI report including CSI sub-reports respectively corresponding to the N CSI report sub-configurations. Each of the CSI sub-reports includes a CRI field based on log₂(K_s), where K_s is the number of CSI-RS resources based on a corresponding CSI report sub-configuration.

In each aspect of the present disclosure, the CSI field may have a size of ceil{log₂(K_s)}.

In each aspect of the present disclosure, a CSI sub-report for a CSI report sub-configuration in which the number of CSI-RS resources is 1 among the N CSI report sub-configurations may not include the CRI field.

In each aspect of the present disclosure, the CSI report configuration may include a CRI as a report quantity.

In each aspect of the present disclosure, each of the L CSI report sub-configurations may include information regarding an antenna port related to a corresponding CSI-RS resource.

In each aspect of the present disclosure, each of the L CSI report sub-configurations may include power-related information related to a corresponding CSI-RS resource.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, energy saving methods and procedures for a network, base station (BS), and/or user equipment (UE) may be provided.

According to some implementation(s) of the present disclosure, a BS and a UE may be less likely to differently interpret a channel state information (CSI) report used for network energy saving.

According to some implementation(s) of the present disclosure, the decoding complexity of a CSI report at a BS may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates an example of multiplexing UCI to a PUSCH;
FIG. 7 illustrates a flow of a channel state information (CSI)-related process;
FIG. 8 illustrates spatial elements adaptation;
FIG. 9 illustrates a CSI report transmission flow at a UE according to some implementations of the present disclosure; and
FIG. 10 illustrates a CSI report reception flow at a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

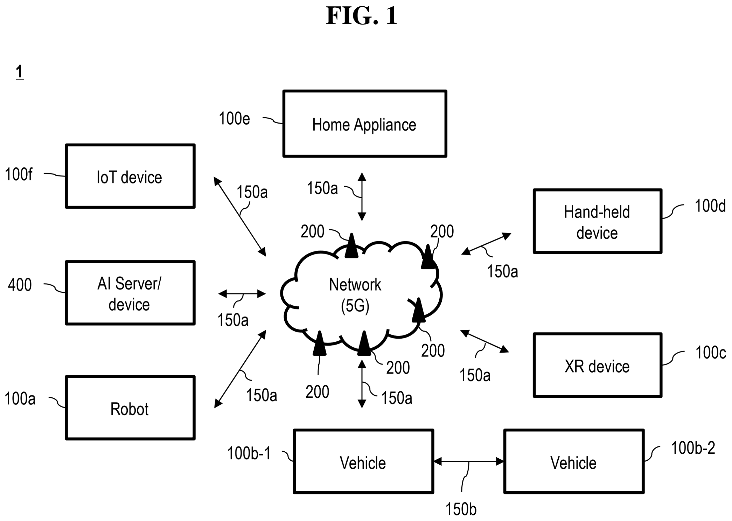

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

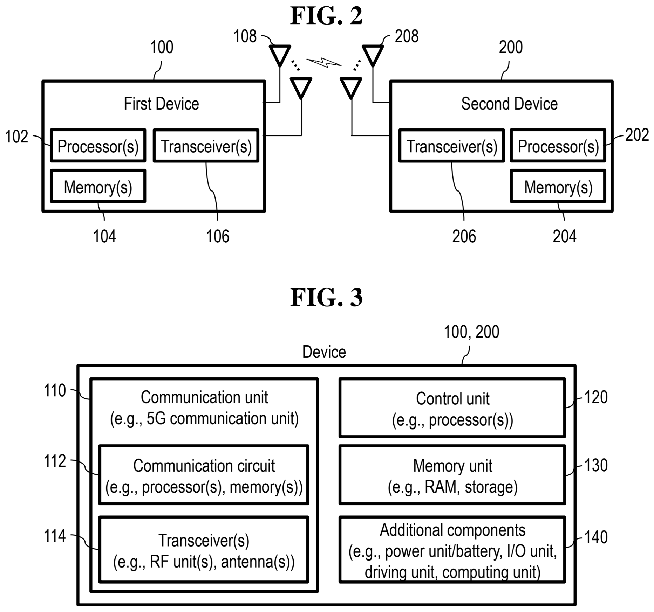

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a transitory memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-transitory) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-transitory) storage medium.

A communication device of the present disclosure includes at least one processor; and at least one computer memory operably connected to the at least one processor and configured to store instructions for causing, when executed, the at least one processor to perform operations according to example(s) of the present disclosure described later.

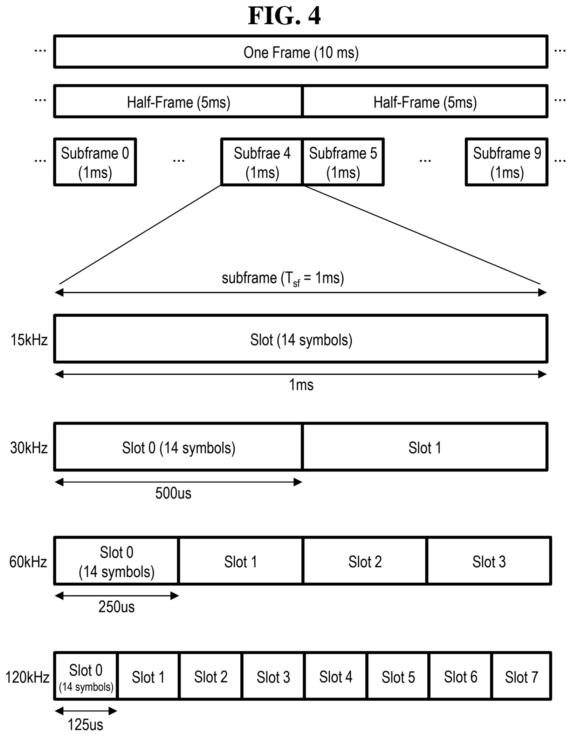

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*N_{f}) where Δfₘₐₓ = 480*10³ Hz and N_{f}= 4096. For reference, a basic time unit for LTE is Tₛ = 1/(△f_{ref}*N_{f,ref}) where Δf_{ref} = 15*10³ Hz and N_{f,ref}= 2048. Tₛ and T_{c} have the relationship of a constant κ = Tₛ/T_{c} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| u | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing Δf= 2^{u*}15 kHz.

**Table 2**

| u | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

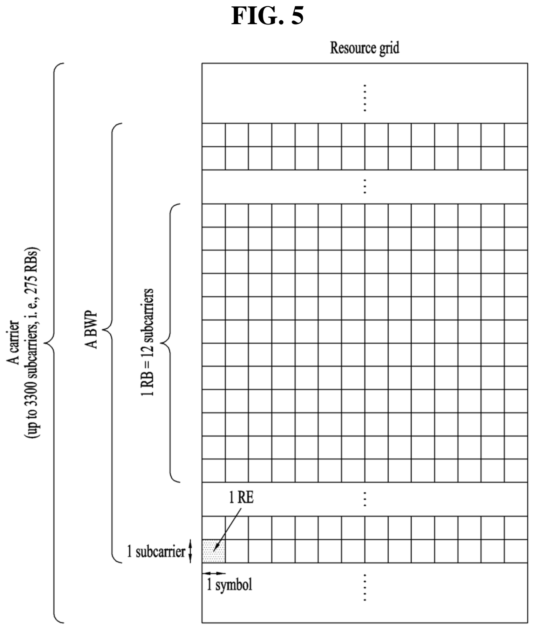

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{slymb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration u is given to the UE by a higher layer parameter (e.g., RRC parameter). Each element in the resource grid for the antenna port p and the subcarrier spacing configuration u is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration u. The center of subcarrier 0 of CRB 0 for the subcarrier spacing configuration u is equal to 'Point A' which serves as a common reference point for RB grids. The PRBs for subcarrier spacing configuration u are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP,i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}BWP = *O*_{carrier} + *RB*ₛₜₐᵣₜ and the number of contiguous RBs *N*^{size}_{BWP} = L_{RB} provided by an RRC parameter *locationAndBandwidth,* which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

Virtual resource blocks (VRBs) may be defined within the BWP and indexed from 0 to *N*^{size,u}_{BWP,i-}1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

A PUCCH is a physical layer UL channel for uplink control information (UCI) transmission. The PUCCH carries UCI. UCI types transmitted on the PUCCH include hybrid automatic repeat request acknowledgement (HARQ-ACK) information, a scheduling request (SR), and channel state information (CSI). UCI bits include HARQ-ACK information bits if present, SR information bits if present, link recovery request (LRR) information bits if present, and CSI bits if present. In the present disclosure, HARQ-ACK information bits correspond to a HARQ-ACK codebook. In particular, a bit sequence in which HARQ-ACK information bits are arranged according to a predetermined rule is called a HARQ-ACK codebook.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2. In some implementations, CSI part 1 may have a fixed payload size and be used to identify the number of information bits in CSI part 2. CSI part 1 is entirely included in a corresponding CSI report before CSI part 2.
- Link recovery request (LRR)

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 4.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

### (1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

### (2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

### (3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 4**

| PUCCH format | Length in OFDM symbols N^{PUCCH}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   **...**
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4 (see Table 4).

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

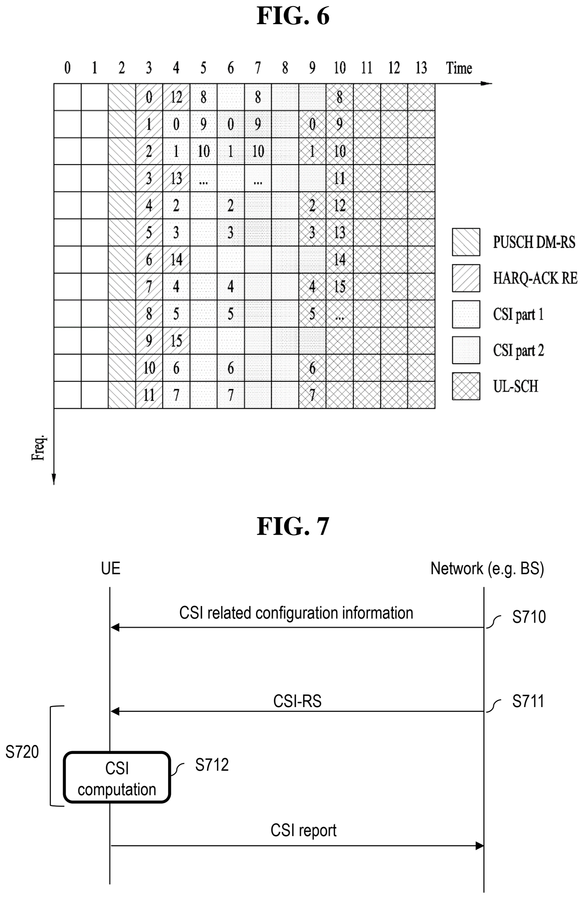

FIG. 6 shows an example of multiplexing UCI to a PUSCH. When PUCCH resources (s) and PUSCH resources overlap each other in a slot and PUCCH-PUSCH simultaneous transmission is not configured, the UCI may be transmitted through the PUSCH as shown in the drawing. Transmitting the UCI through the PUSCH is referred to as UCI piggyback or PUSCH piggyback. FIG. 6 illustrates a case in which HARQ-ACK and channel state information (CSI) are loaded on a PUSCH resource.

### <S1_CSI reporting>

CSI reporting is used for a UE to measure a radio channel state and report the radio channel state to a network. The time and frequency resources to be used by the UE to report CSI are controlled by a BS. In a 3GPP-based system, CSI may include the following indicators/reports: channel quality indicator (CQI), precoding matrix indicator (PMI), CSI-RS resource indicator (CRI), SS/PBCH block resource indicator (SSBRI), layer indicator (LI), rank indicator (RI), layer-1 reference signal reception power (L1-RSRP) or layer-1 signal to interference and noise ratio (L1-SINR).

In 3GPP-based systems (e.g., NR), CSI-RS is used for time and/or frequency tracking, CSI computation, L1-RSRP computation, and mobility management. Here, CSI computation is related to CSI acquisition, and L1-RSRP computation is related to beam management (BM).

The CSI refers to information indicating the quality of a radio channel (or link) formed between the UE and the antenna port(s).

FIG. 7 illustrates a flow of a CSI-related process.

Referring to FIG. 7, the UE may receive configuration information related to CSI from the BS through RRC signaling (S710). The configuration information related to the CSI may include at least CSI interference management (CSI-IM) resource related information, CSI measurement configuration related information, CSI resource configuration related information, CSI-RS resource related information, or CSI report configuration related information.

The CSI resource configuration related information may be represented as CSI-ResourceConfig IE. The CSI resource configuration related information defines a group including at least a non-zero power (NZP) CSI-RS resource set, CSI-IM resource set, or CSI-SSB resource set. That is, the CSI resource configuration related information may include a CSI-RS resource set list, and the CSI-RS resource set list may include at least an NZP CSI-RS resource set list, a CSI-IM resource set list, or a CSI-SSB resource set list. The CSI-RS resource set is identified by a CSI-RS resource set ID, and the CSI-RS resource set includes at least one CSI-RS resource. Each CSI-RS resource is identified by a CSI-RS resource ID.

As shown in the following table, which is an example of NZP-CSI-RS-ResourceSet IE, a parameter indicating the use of CSI-RS for each NZP CSI-RS resource set (e.g., BM-related 'repetition' parameter or tracking-related 'trs-Info' parameter) may be configured.

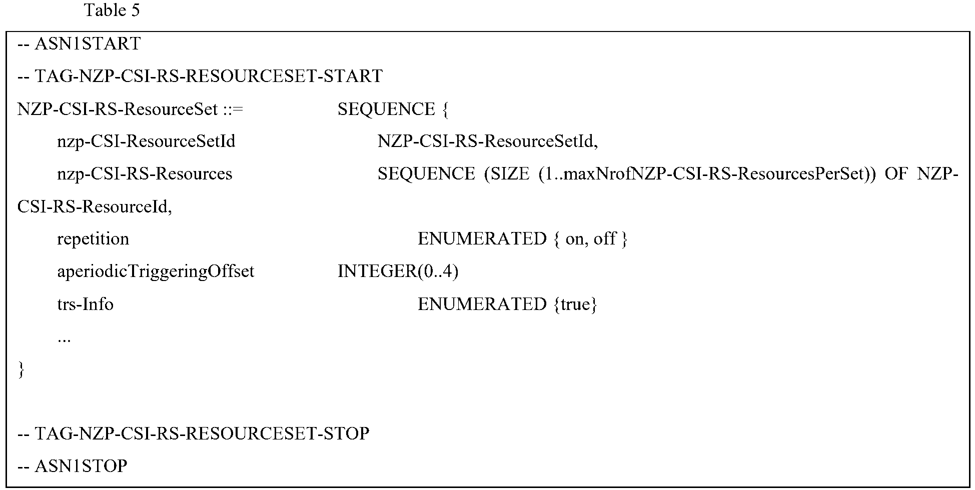

Here, a repetition parameter corresponding to a higher layer parameter corresponds to 'CSI-RS-ResourceRep' of a parameter L1.

CSI report configuration related information includes a parameter reportConfigType indicating a time domain behavior and a parameter reportQuantity indicating CSI related quantity for reporting. The time domain behavior may be periodic, non-periodic or semi-persistent.

The CSI report configuration related information may be represented as CSI-ReportConfig IE and the following tables shows examples of CSI-ReportConfig IE.

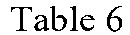

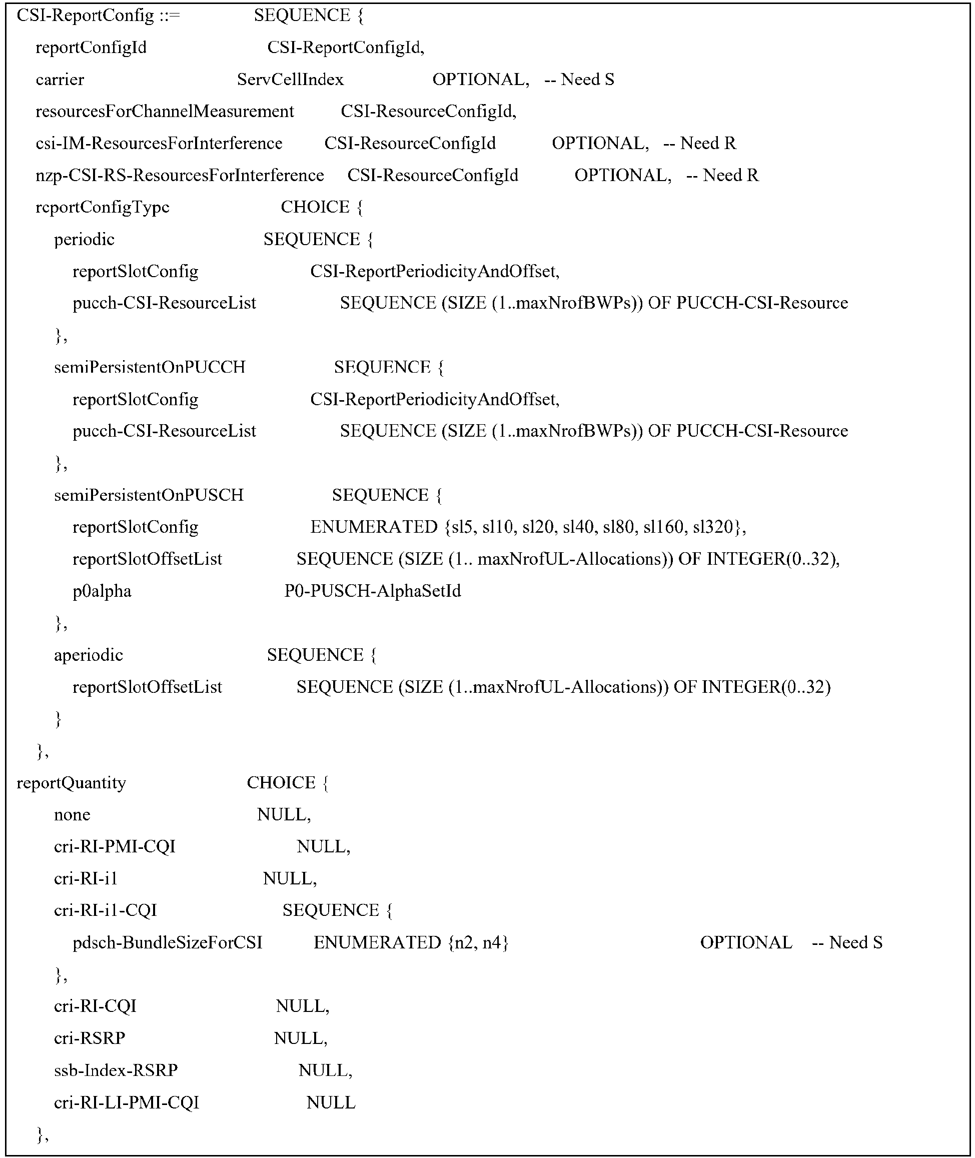

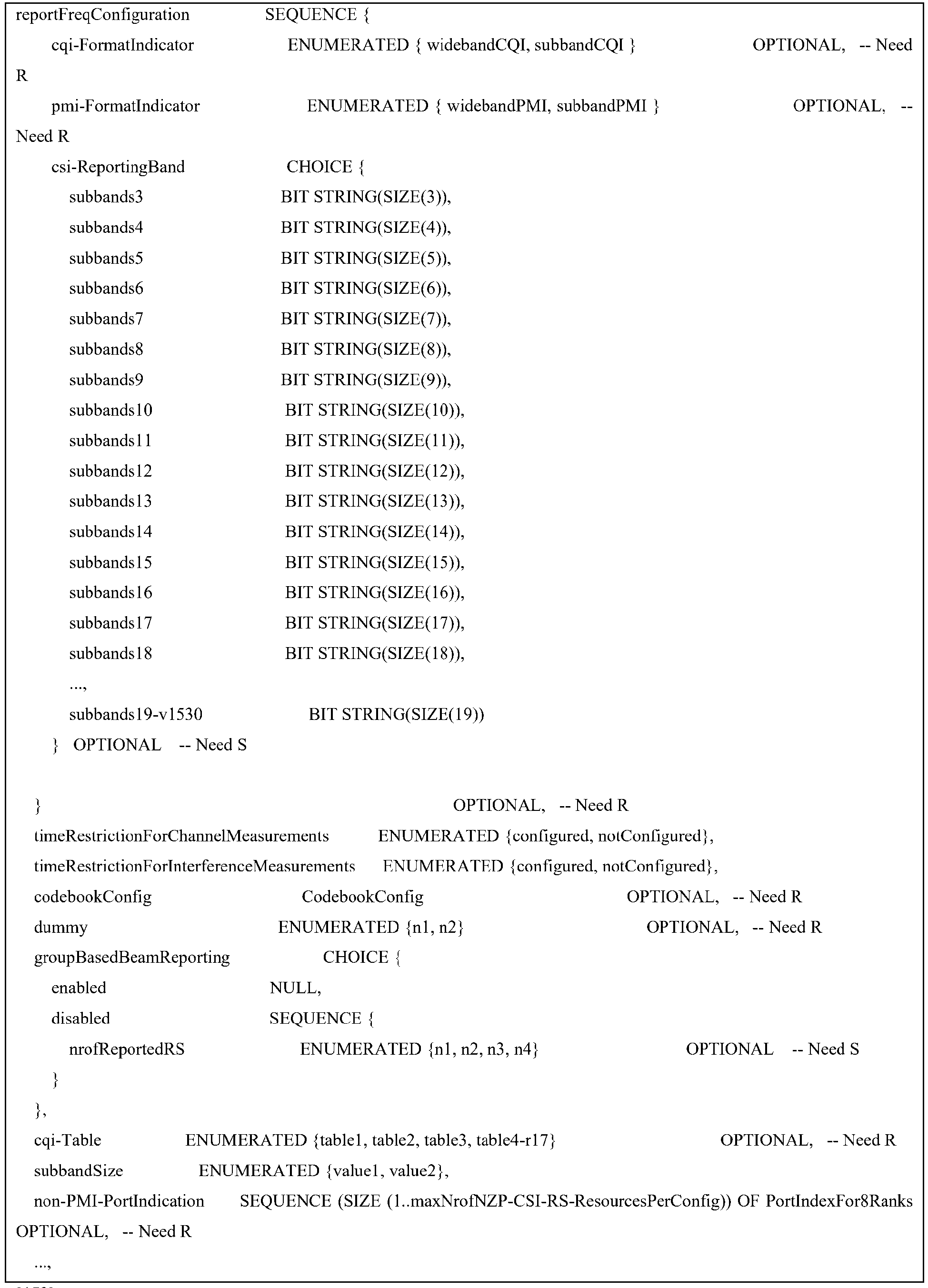

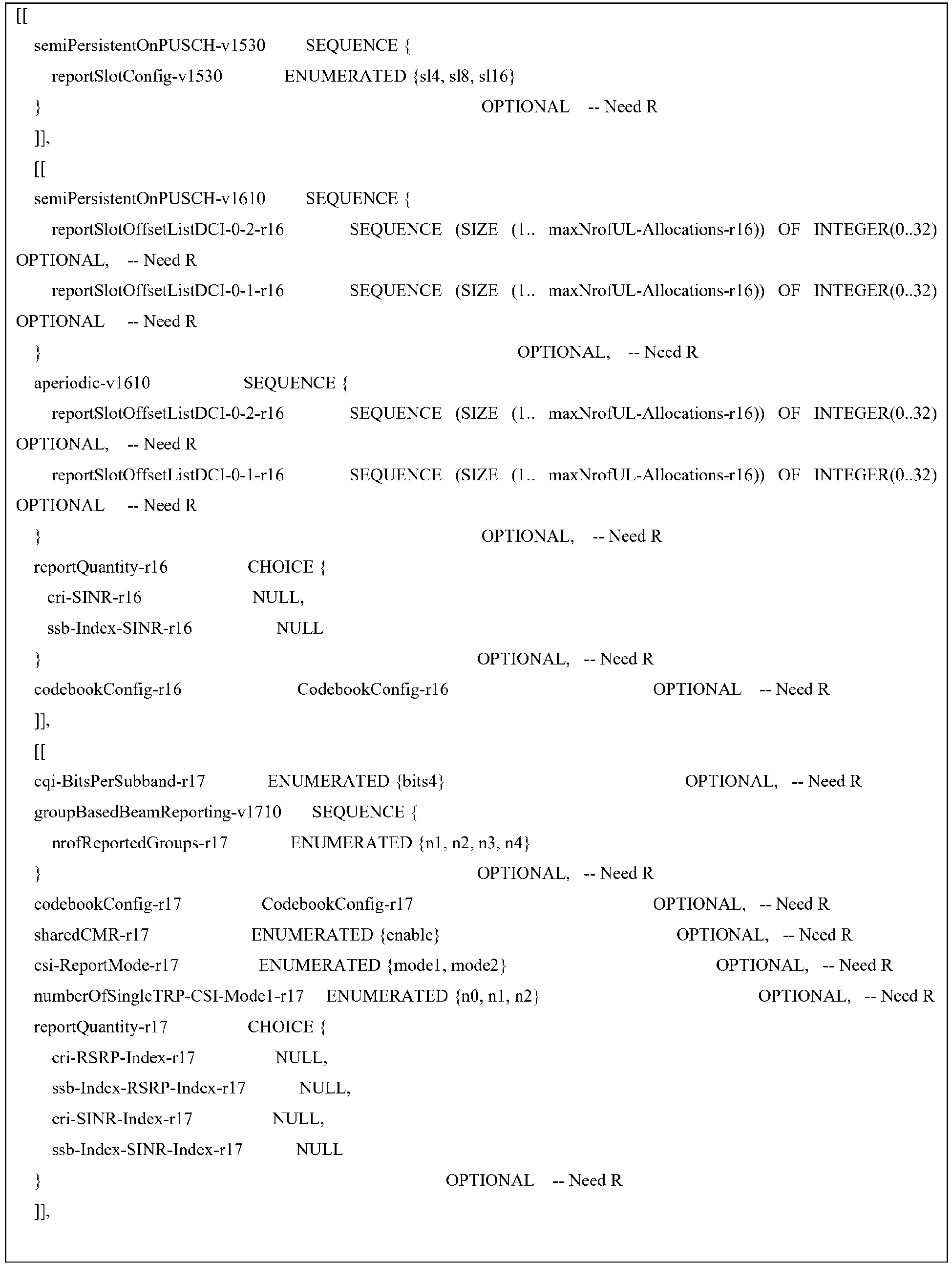

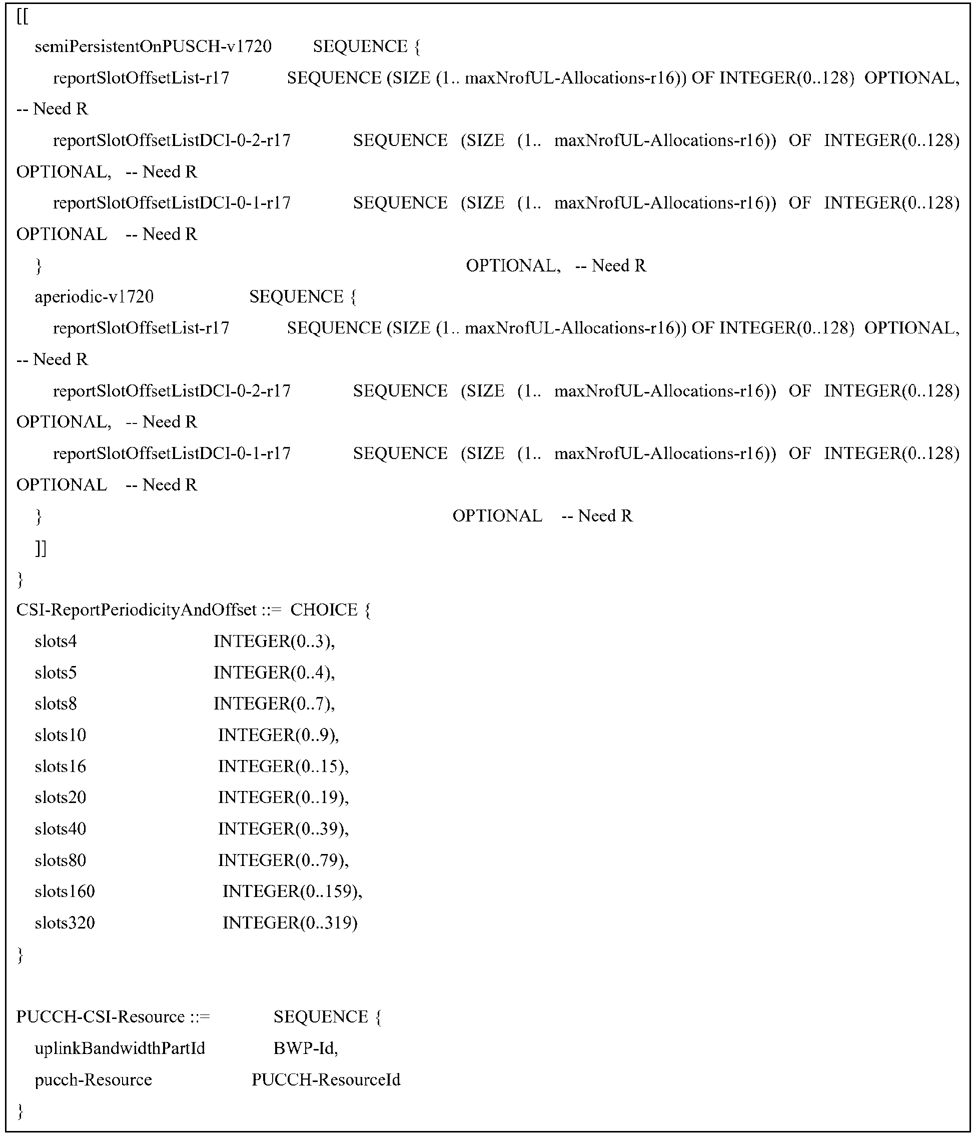

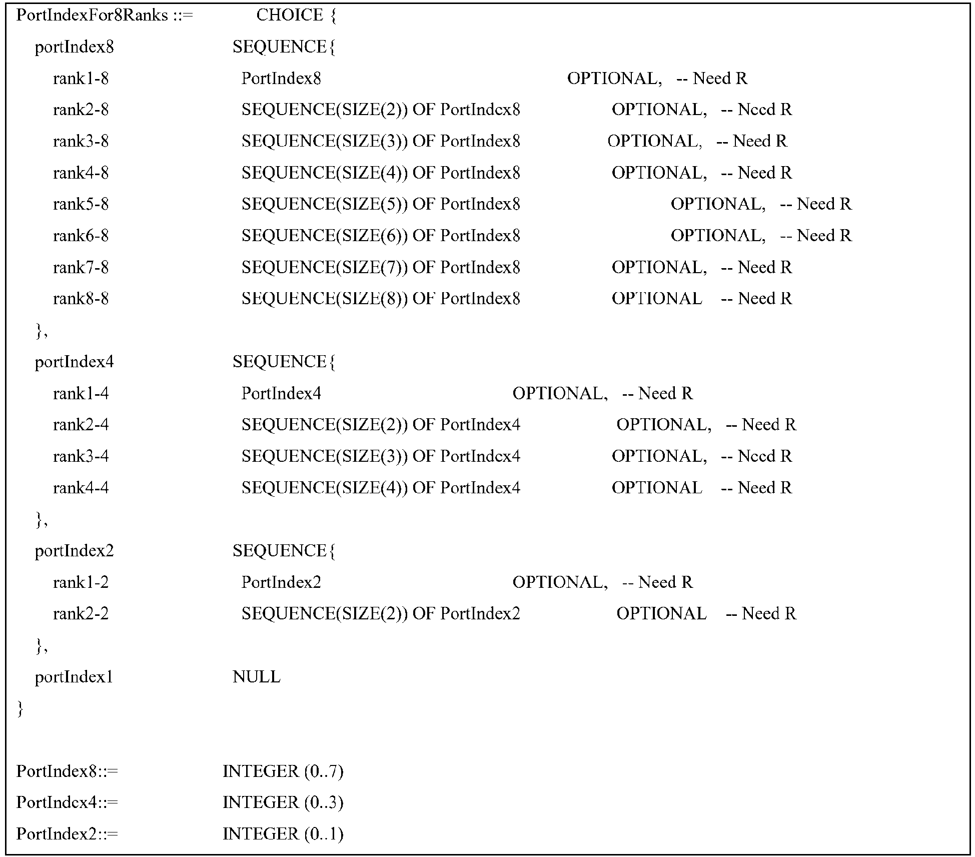

The following tables show examples of *CSI-ResourceConfig* IE, and *CSI-ResourceConfig* IE defines one or more groups among *NZP-CSI-RS-ResourceSet, CSI-IM-ResourceSet,* and/or *CSI-SSB-ResourceSet.*

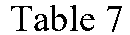

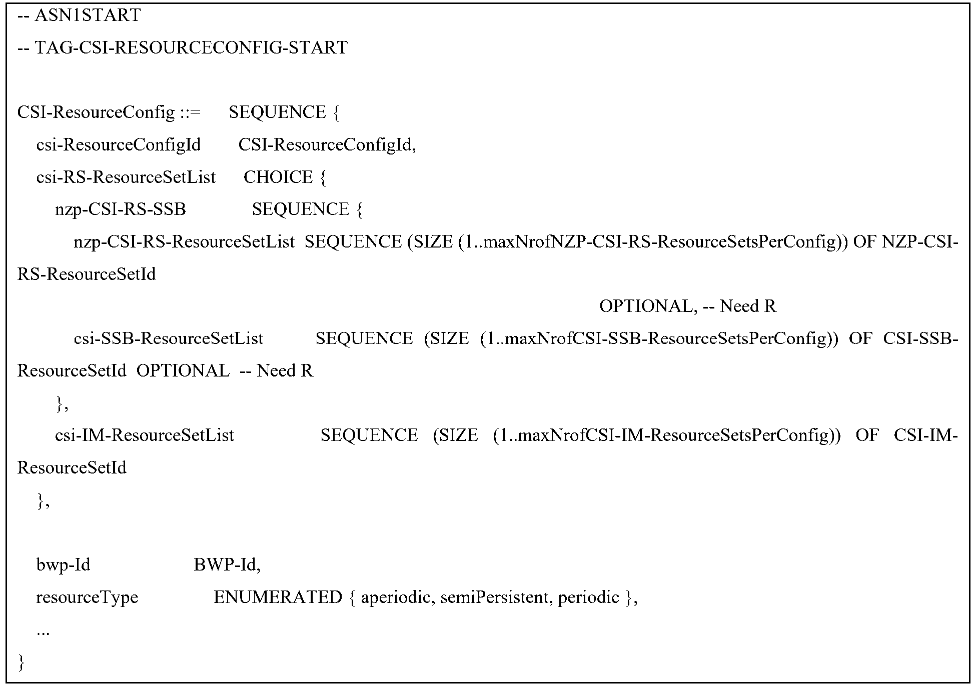

The UE performs CSI measurement based on configuration information related to CSI (S720).

The CSI measurement may include (1) an operation of receiving CSI-RS by the UE (S721), and (2) an operation of performing CSI computation through the received CSI-RS (S722).

In the CSI-RS, resource element (RE) mapping of a CSI-RS resource is configured in the time and frequency domains by a higher layer parameter *CSI-RS-ResourceMapping.* The following shows examples of *CSI-RS-ResourceMapping* IE.

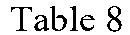

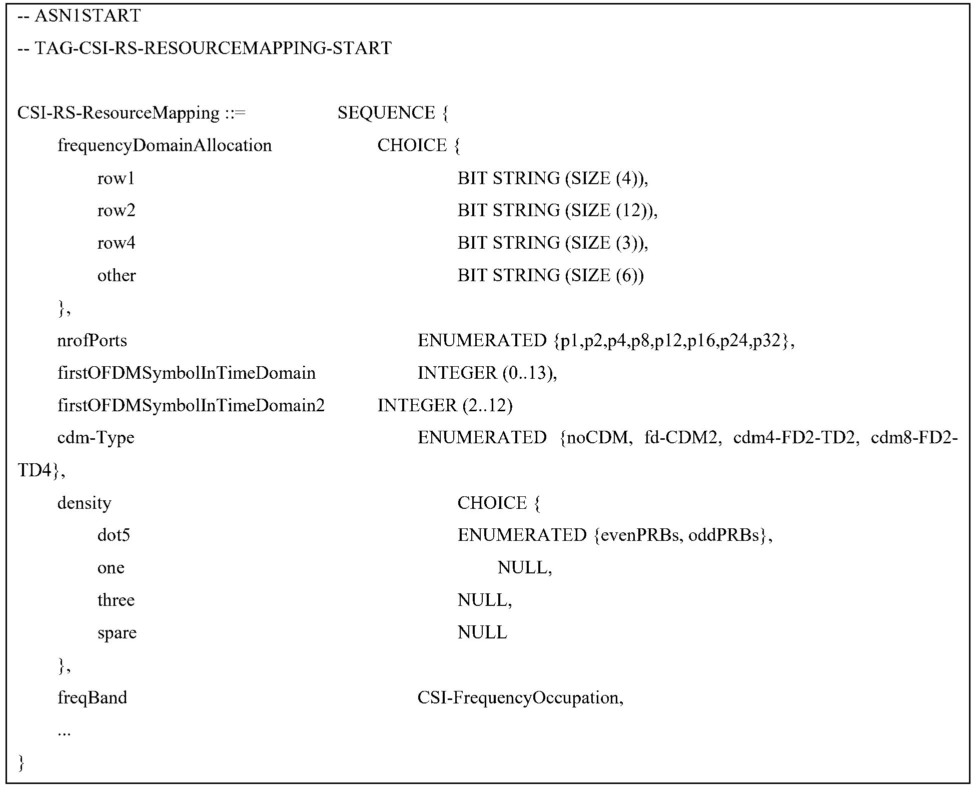

In the table above, density represents the density of CSI-RS resources measured in RE/port/PRB, and nrofPorts represents the number of antenna ports.

The UE may transmit a CSI report based on the computed CSI (S730). Here, when a parameter quantity of CSI-ReportConfig is configured to 'none (or No report)', the UE may omit transmission of the CSI report. However, even when the parameter quantity is configured to 'none (or No report)', the UE may transmit the CSI report to the BS. When the parameter quantity is configured to 'none', this means that an aperiodic tracking reference signal (TRS) is triggered or repetition is configured. Here, only when the repetition is configured to 'ON', transmission of the CSI report may be omitted (refer to Table 5).

### <S1.1_CSI Measurement>

A 3GPP-based system (e.g., NR system) supports more flexible and dynamic CSI measurement and CSI reporting. Here, the CSI measurement may include a process in which the UE receives a CSI-RS and performs CSI computation based on the received CSI-RS to obtain CSI.

As for the time domain behavior of CSI measurement and CSI reporting, aperiodic/semi-persistent/periodic channel measurement (CM) and interference measurement (IM) are supported. A 4-port NZP CSI-RS resource element (RE) pattern may be used to configure CSI-IM.

The BS may transmit precoded NZP CSI-RS to the UE on each port of the configured NZP CSI-RS-based IM resource (IMR).

The UE may assume a channel/interference layer for each port in the CSI-RS resource set and perform interference measurement.

A set of multiple CSI-RS resources may be configured, and the BS or the network may indicate a subset of NZP CSI-RS resources for channel/interference measurement through DCI.

### <S1.1.1_Rresource setting>

Each CSI resource set 'CSI-ResourConfig' includes a configuration of a list of S≥1 CSI resource sets (given by a higher layer parameter *csi-RS-ResourceSetList),* and in this case, the list includes references of one or two of non-zero power (NZP) CS-RS resource set (s) and SS/PBCL block set(s), or the list includes references of CSI interference measurement (CSI-IM) reference set(s). The configuration for S≥1 CSI resource sets include each CSI resource set including CSI-RS resources (including NZP CSI-RS or CSI-IM) and a SS/PBCH block (SSB) resource used in L1-RSRP computation.

The time domain behavior of the CSI-RS resource(s) within the CSI resource setting included in the CSI-ResourceConfig IE is indicated by a higher layer parameter *resourceType,* and may be configured to be aperiodic, periodic, or semi-persistent. For periodic and semi-persistent CSI resource settings, the number S of configured CSI-RS resource sets is limited to '1'. For periodic and semi-persistent CSI resource settings, the configured periodicity and slot offset are determined based on a numerology (e.g., subcarrier spacing) of the related DL BWP, given by bwp-id.

When the UE is configured to a plurality of CSI-resourceConfigs including the same NZP CSI-RS resource ID, the same time domain behavior is configured for CSI-ResourConfig.

When the UE is configured to a plurality of CSI-resourceConfigs including the same CSI-IM resource ID, the same time domain behavior is configured for CSI-ResourConfig.

### <S1.1.2_Resource setting configuration>

As described above, CSI resource settings may be provided by a list of CSI resource sets. For aperiodic CSI, each trigger state, configured using a higher layer parameter CSI-AperiodicTriggerState, means that each CSI-ReportConfig is related to one or more CSI-ReportConfig linked with periodic, semi-persistent, or aperiodic settings. One report setting may be connected to up to three resource settings.

### <S.1.1.3_CSI computation>

When interference measurement is performed on CSI-IM, each CSI-RS resource for channel measurement is related to a CSI-IM resource for each resource in the order of the CSI-RS resource and the CSI-IM resource within the corresponding resource sets. The number of CSI-RS resources for channel measurement is the same as the number of CSI-IM resources. For CSI measurement, the UE assumes the following.
- Each NZP CSI-RS port configured for interference measurement corresponds to an interference transmission layer.
- All interference transmission layers on NZP CSI-RS ports for interference measurement consider the associated energy per resource element (EPRE) ratios.
- Other interference signals on resource elements of NZP CSI-RS resource for channel measurement, NZP CSI-RS resource for interference measurement, or CSI-IM resource for interference measurement.

For L1-SINR with dedicated interference measurement resources, the UE assumes the following:

Total received power on the dedicated NZP CSI-RS resource for interference measurement or dedicated CSI-IM resource for interference measurement corresponds to interference and noise.

### <S1.2_CSI Report>

The time and frequency resources to be used by the UE to report CSI are controlled by a BS.

The CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), or L1-RSRP.

For CQI, PMI, CRI, SSBRI, LI, RI, and L1-RSRP, the UE is configured by a list of N≥1 CSI-ReportConfig reporting setting, M≥1 CSI-ResourceConfig resource setting, or one or more trigger states (e.g., higher layer parameter *aperiodicTriggerStateList* and *semiPersistentOnPUSCH-TriggerStateList).* In the *aperiodicTriggerStateList,* each trigger state includes a related *CSI-ReportConfigs* list indicating a channel and optionally resource set IDs for interferene. In the *semiPersistentOnPUSCH-TriggerStateList,* each trigger state may include one related *CSI-ReportConfig.*

The time domain behavior of CSI reporting supports periodic, semi-persistent, and aperiodic.
i) Periodic CSI reporting is performed on a short PUCCH and a long PUCCH. The periodicity and slot offset of periodic CSI reporting may be configured via RRC and *CSI-ReportConfig* IE may be referenced.
ii) Semi-persistent (SP) CSI reporting is performed on a short PUCCH, a long PUCCH, or a PUSCH. In the case of SP CSI on the short/long PUCCH, the periodicity and the slot offset are configured via RRC, and activation/deactivation of CSI report is performed on a separate MAC control element (CE). In the case of SP CSI on the PUSCH, the periodicity of SP CSI reporting is configured via RRC, but the slot offset is not configured via RRC, and SP CSI reporting is activated/deactivated by DCI (e.g., DCI format 0_1). For SP CSI reporting on the PUSCH, a separate RNTI (e.g., SP-CSI C-RNTI) may be used. First CSI report timing complies with a PUSCH time domain assignment value indicated by the DCI, and subsequent CSI report timing complies with periodicity configured via RRC. DCI format 0_1 may include a CSI request field and activate/deactivate a specific configured SP-CSI trigger state. SP CSI reporting may be activated/deactivated in the same or similar manner as a mechanism with data transmission on the SPS PUSCH.
iii) Aperiodic (AP) CSI reporting may be performed on the PUSCH and may be triggered by DCI. In this case, information related to trigger of aperiodic CSI reporting may be delivered/instructed/configured through a MAC CE. In the case of AP CSI with AP CSI-RS, AP CSI-RS timing may be configured by RRC, and timing for AP CSI reporting may be dynamically controlled by DCI.

A method of dividing and reporting CSI in a plurality of reporting instances applied to PUCCH-based CSI report in LTE (e.g., transmitting in the order of RI, WB PMI/CQI, and SB PMI/CQI) is not applied in NR. Instead, the NR is limited from configuring specific CSI report in the short/long PUCCH, and a CSI omission rule is defined. With respect to AP CSI reporting timing, the PUSCH symbol/slot location is dynamically indicated by DCI. Candidate slot offsets may be configured by RRC. For CSI reporting, slot offset Y may be configured per reporting setting. For UL-SCH, slot offset K2 may be configured separately.

Two CSI latency classes (e.g., low latency class or high latency class) may be defined in terms of CSI computation complexity. Low latency CSI is wideband (WB) CSI including up to 4 ports Type-I codebook or up to 4 ports non-PMI feedback CSI. High latency CSI refers to any CSI other than low latency CSI. For a normal UE, (Z, Z') is defined as a unit of OFDM symbols. Here, Z represents a minimum CSI processing time until CSI reporting is performed after aperiodic CSI triggering DCI is received. Z' represents a minimum CSI processing time until CSI reporting is performed after CSI-RS for channel/measurement is received.

The UE may report the number of CSIs to be calculated simultaneously.

The UE calculates the CSI parameters (if reported) assuming the following dependencies between the CSI parameters (if reported).
- LI is calculated conditioned on the reported CQI, PMI, RI and CRI.
- CQI is calculated conditioned on the reported PMI, RI, and CRI.
- PMI is calculated based on reported RI and CRI.
- RI is calculated based on the reported CRI.

Reporting settings for CSI may be aperiodic (using PUSCH), periodic (using PUCCH), or semi-persistent (using PUCCH and DCI activated PUSCH). CSI-RS resources may be periodic, semi-persistent, or aperiodic. The semi-persistent CSI-RS may be activated and deactivated as described in section 5.2.1.5.2 of 3GPP TS 38.214, and aperiodic CSI-RS may be configured and triggered/activated as described in section 5.2.1.5.1 of 3GPP TS 38.214. The following table illustrating the triggering/activation for possible CSI-RS configurations shows the supported combinations of CSI reporting configurations and CSI-RS resource configurations and how the CSI reporting is triggered on each CSI-RS resource configuration.

**Table 9**

| **CSI-RS Configuration** | **Periodic CSI Reporting** | **Semi-Persistent CSI Reporting** | **Aperiodic CSI Reporting** |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

The following table shows information related to activation/deactivation/triggering by MAC CE related to semi-persistent/aperiodic CSI reporting defined in 3GPP TS 38.321.

**Table 10**

| |
|---|
| **5.18.2 Activation/Deactivation of Semi-persistent CSI-RS/CSI-IM resource set** |
| The network may activate and deactivate the configured Semi-persistent CSI-RS/CSI-IM resource sets of a Serving Cell by sending the SP CSI-RS/CSI-IM Resource Set Activation/Deactivation MAC CE described in subclause 6.1.3.12. The configured Semi-persistent CSI-RS/CSI-IM resource sets are initially deactivated upon configuration and after a handover. The MAC entity shall: |
| 1> if the MAC entity receives an SP CSI-RS/CSI-IM Resource Set Activation/Deactivation MAC CE on a Serving |
| Cell: |
| 2> indicate to lower layers the information regarding the SP CSI-RS/CSI-IM Resource Set Activation/Deactivation MAC CE. **5.18.3 Aperiodic CSI Trigger State subselection** |
| The network may select among the configured aperiodic CSI trigger states of a Serving Cell by sending the Aperiodic CSI |
| Trigger State Subselection MAC CE described in subclause 6.1.3.13. The MAC entity shall: |
| 1> if the MAC entity receives an Aperiodic CSI trigger State Subselection MAC CE on a Serving Cell: |
| 2> indicate to lower layers the information regarding Aperiodic CSI trigger State Subselection MAC CE. |

### <S2. Network Energy Saving (NES)>

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

In mmWave, the wavelength is shorter, allowing for the installation of multiple antennas in the same area. That is, in the 30GHz band, the wavelength is 1cm, and a 5x5cm panel may accommodate 100 antenna elements in a 2D array with a spacing of 0.5 lambda (wavelength). Therefore, mmWave aims to increase coverage or throughput by enhancing a beamforming (BF) gain through the use of multiple antenna elements. In this case, when each antenna element has its own transceiver unit (TXRU) to adjust transmission power and a phase, independent BF for each frequency resource is possible. However, installing TXRUs for all of approximately 100 antenna elements is not cost-effective. Accordingly, a method for mapping multiple antenna elements to a single TXRU and controlling a beam by an analog phase shifter is under consideration. However, this analog BF approach has the disadvantage of only being able to create one beam direction in an entire frequency band, making frequency-selective beamforming impossible. An intermediate form between digital BF and analog BF, hybrid BF may be considered, in which B TXRUs fewer than Q antenna elements are used. In this case, the number of simultaneously transmittable beam directions is limited to B or fewer, which may vary according to a specific connection method between B TXRUs and Q antenna elements.

The present disclosure primarily considers a scenario in which a BS achieves a network energy saving (NES) gain by receiving CSI for a plurality of antenna ports (APs) and/or power offsets from a UE at once and then adjusting the number of APs to be used for DL signal/channel transmission to the UE (or turning on/off some of the antenna elements (AEs)/TXRUs connected to the APs) or adjusting transmission power. If the BS is able to reduce the number of APs or transmission power based on the CSI reported by the UE, it may achieve an energy saving (ES) gain by reducing unnecessary AEs or controlling transmission power. For example, a CSI-RS resource set may include a single CSI-RS resource or multiple CSI-RS resources, and the BS may configure the UE to report, in a single CSI report, CSI for a plurality of assumed numbers of APs (e.g., 64 APs and 32 APs) and/or CSI for a plurality of CSI-RS to PDSCH power offset values (e.g., -3dB and 0dB), for each CSI-RS resource in the CSI-RS resource set. Based on information in the CSI report, the BS may then determine an optimal number of APs and PDSCH transmission power/modulation and coding scheme (MCS) to reduce its power consumption.

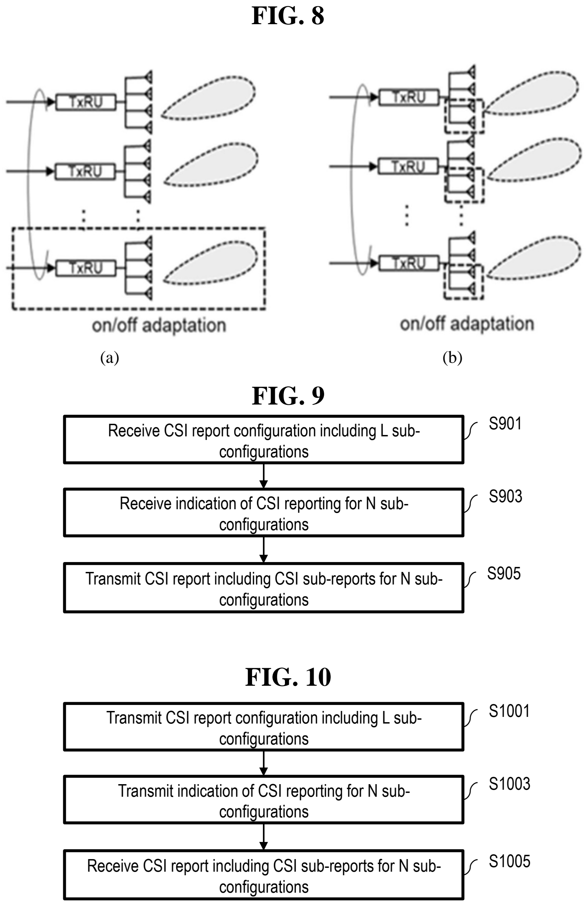

FIG. 8 is an abstract diagram illustrating a hybrid BF structure from the perspective of TXRUs and physical antennas.

In mmW, a wavelength becomes shorter, making it possible to install multiple antennas in the same area. That is, in a band of 30 GHz, a wavelength is 1 cm, and thus a total of 100 antenna elements may be installed in a 2-dimensional array at 0.5 lambda (wavelength) intervals on a panel of 5 by 5 cm. Therefore, in mmW, multiple antenna elements are used to increase beamforming (BF) gain to increase coverage or increase throughput. In this case, independent beamforming for each frequency resource is possible when a transceiver unit (TXRU) is installed to adjust transmission power and phase for each antenna element. However, installing TXRU on all 100 antenna elements has a problem of being less effective in terms of price. Therefore, a method of mapping multiple antenna elements to one TXRU and controlling a beam direction with an analog phase shifter is considered. This analog beamforming method has a disadvantage of being unable to provide frequency-selective beamforming because only one beam direction is generated in an entire band. A hybrid BF with B TXRUs, which is less than Q antenna elements, may be considered as an intermediate form between digital BF and analog BF. In this case, there are differences depending on a connection method of B TXRUs and Q antenna elements, but the beam directions in which simultaneous transmission is possible may be limited to B or less.

In the present disclosure, a scenario in which the BS receives a CSI report for multiple antenna ports (AP) and/or multiple power offsets at once and adjusts the number of APs to be used (ON/OFF some of antenna elements/transceiver units (TxRU) connected to the AP) when transmitting a downlink signal/channel to the UE or adjusts transmission power to obtain NES gain is mainly considered. When the BS is capable of reducing the number of APs or reduce transmission power based on the CSI reported by the UE, energy saving (ES) gain may be obtained through unnecessary antenna elements (AE) or adjustment of transmission power. For example, the BS may include one CSI-RS resource or multiple CSI-RS resources within the CSI-RS resource set, and for each CSI-RS resource within the CSI-RS resource set, CSI and/or CSI for multiple CSI-RS to PDSCH power offset values (e.g., -3 dB or 0 dB) assuming plural numbers of APs (e.g., 64 APs and 32 APs) may be configured to be included in one CSI report and reported, and the optimal number of APs and PDSCH transmission power/modulation and coding scheme (MCS) may be determined based on the information in the CSI report to help reduction of power consumption.

FIG. 8 illustrates spatial elements adaptation. Specifically, FIG. 8(a) illustrates a Type-1 configuration of spatial elements and logical antenna ports, while FIG. 8(b) illustrates a Type-2 configuration of spatial elements and logical antenna ports. The BS may apply or implement both Type-1 and Type-2 methods, when performing spatial elements adaptation.

Referring to FIG. 8(a), in Type-1 spatial elements adaptation, all spatial elements connected to a specific logical antenna port are enabled/disabled. Although the number of logical antenna ports may be different before and after adaptation, a beam (e.g., CSI-RS beam) for each logical port may remain the same.

Referring to FIG. 8(b), in Type-2 spatial elements adaptation, only some of spatial elements connected to a specific logical antenna port are enabled/disabled. Due to port virtualization, the number of logical ports remains the same before and after adaptation. However, when some spatial elements are turned off, the number of spatial elements available for beamforming at the BS decreases, thereby widening a beam (e.g., CSI-RS beam) for each logical port.

However, when a single CSI report needs to be configured with CSIs for a plurality of numbers of antenna ports (NAPs) and/or power control offset (PCO) values, the computational complexity of the UE and a CSI overhead/payload size increase, compared to when a single CSI report is configured with CSI for a single NAP and/or PCO value. Consequently, the efficiency of resources for configuring and transmitting the CSI report may be significantly reduced.

Hereinafter, an operation in which the BS operates in a network energy saving (NES) mode for energy saving (ES) may mean that, for example, an operation in which the BS obtains power consumption of the BS and the UE by configuring a plurality of OFF sections (i.e., discontinuous transmission (DTX) sections of the BS) in which transmission of a specific DL signal during a pre-specific time section is turned off, indicating one OFF section from among the OFF sections dynamically, and indicating that the corresponding DL signal is not transmitted during a predefined time. Hereinafter, a NES mode may refer to an operation mode in which the BS does not perform transmission and/or reception through a corresponding antenna port to reduce power consumption of the BS and the UE, for example, when a specific reception antenna port is turned off semi-statically or dynamically in BWP switching, dynamic resource block (RB) adaptation, and the like in the frequency domain as well as the domain, and in the spatial domain.

In the present disclosure, NAP represents "number of antenna port" and PCO represents "power control offset" (i.e., *powerControlOffset).* Here, PCO may mean an RRC parameter *powerControlOffset* indicating a power offset value of PDSCH RE to NZP CSI-RS RE or may also mean *powerControlOffsetSS,* which means a ratio of NZP CSI-RS EPRE to SS/PBCH block EPRE. In the former case, PDSCH power may be adjusted based on CSI-RS power, and in the latter case, CSI-RS power may be adjusted based on SSB power. The following is a description of a parameter *powerControlOffset* and a parameter *powerControlOffsetSS* disclosed in 3GPP TS 38.331 and the parameter *powerControlOffset* and the parameter *powerControlOffsetSS* may be provided to the UE by the BS through RRC signaling.

**Table 11**

| |
|---|
| *powerControlOffset:* which is the assumed ratio of PDSCH EPRE to NZP CSI-RS EPRE when UE derives CSI feedback and takes values in the range of [-8, 15] dB with 1 dB step size. For CQI calculation based on a pair of NZP CSI-RS resources, *powerControlOffset* of each NZP CSI-RS resource in the pair of NZP CSI-RS resources for channel measurement is the assumed ratio of EPRE when UE derives CSI feedback and takes values in the range of [-8, 15] dB with 1 dB step size. |
| *powerControlOffsetSS:* which is the assumed ratio of NZP CSI-RS EPRE to SS/PBCH block EPRE. |

A description will be given of some implementations of the present disclosure regarding a method for configuring a CSI report by a UE, when a BS requests the UE to report a plurality of CSI sub-reports for a plurality of preconfigured CSI report sub-configurations, for the purpose of energy saving through adaptation in spatial (e.g., antenna element) and power (e.g., DL power) domains.

In the present disclosure, the following may be considered in relation to CSI reporting.

A CSI report configuration may include sub-configurations. When L (L > 1) sub-configurations are included in the CSI report configuration, zero or more of the following parameters may be included for each sub-configuration, for Type-1 spatial domain adaptation.
- The number N1 of antenna elements within a panel in a horizontal direction, the number N2 of antenna elements within the panel in a vertical direction, and the number Ng of antenna panels.
- Port subset indication, if a resource configured in a resource set within a resource setting may be associated with one or more spatial adaptation patterns.
- Rank restriction.
- Codebook subset restriction.
- Supported codebook types for PMI (e.g., Type-I or Type-II).
- Report quantity.
- reportFreqConfiguration, which indicates a reporting granularity in the frequency domain, including a CSI reporting band and whether PMI/CQI reporting is for a wideband, for a subband, or for both.
- Group identity of non-zero power (NZP) CSI-RS resource(s) in a resource set for channel measurement, in the case where a resource set with a plurality of resources is configured within a resource setting and each resource is associated with only one spatial adaptation pattern.

For example, the following RRC configuration, *CSI-ReportSubConfig* may be used to configure parameters in a sub-configuration within the CSI report configuration.

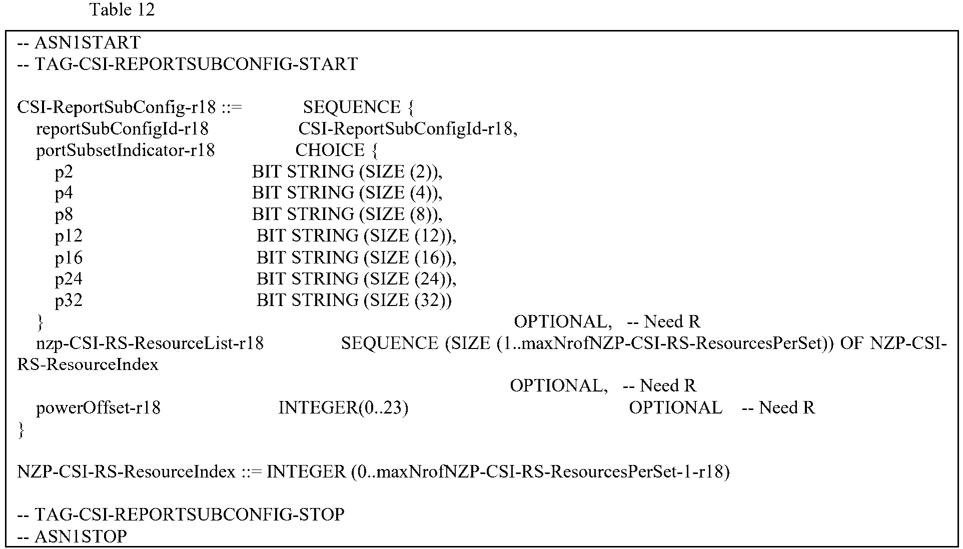

**Table 13**

| ***CSI-ReportSubConfig* field descriptions** |
|---|
| ***port-subsetIndicator*** |
| Indicates the number of ports of the NZP CSI-RS resources indicated in *nzp-CSI-RS-resourceList* (the value is the same like *portNumber* of these NZP CSI-RS resources) and the (sub)set of CSI-RS antenna ports used for CSI calculation of the sub-configuration. In the bit string, each bit corresponds to an antenna port. When a bit is set to 1, the corresponding port is enabled for CSI calculation corresponding to the sub-configuration. When the bit is set to zero, the corresponding port is not enabled for CSI calcualton corresponding to the sub-configuration. |
| ***nzp-CSI-RS-resourceList*** |
| List of NZP CSI RS resources for the sub-configuration that is a (sub)set of NZP CSI-RS resource(s) of the CSI-RS resource set for channel measurement associated with the sub-configuration in the CSI 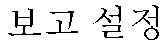 . Value 0 refers to the first NZP CSI RS resource of the CSI-RS resource set, value 1 refers to the second NZP CSI RS resource of the CSI-RS resource set, and so on. |
| ***powerOffset*** |
| When *powerControlOffset* is configured in a NZP CSI-RS resources indicated by *nzp-CSI-RS-Resources,* the power offset of PDSCH RE to NZP CSI-RS RE is equal to *powerControlOffset - powerOffset.* |

In Table 12 and Table 13, the parameter *port-subsetIndicator* may correspond to the afore-mentioned NAP-related configuration, and the parameter *powerOffset* may correspond to the aforementioned PCO-related configuration.

The BS may turn on and off certain spatial elements (in the present disclosure, spatial elements may mean antenna ports or active transceiver chains or panels or TRPs) for NES purposes or adjust a power value for a downlink signal/channel. The BS links CSI-RS resources (sets) with different antenna ports for one CSI report setting (e.g., CSI-ReportConfig) to dynamically apply various NES technologies in these power and power domains or may link a plurality of power offset parameters (e.g., a parameter *powerControlOffset,* which is a power offset value between PDSCH and CSI-RS, or a parameter *powerControlOffsetSS,* which is a power offset value between SSS and CSI-RS) with each other.

At least one CSI framework from among the following methods may be introduced.
- Method#1: A plurality of CSI-RS resource sets may be linked with one CMR (CMR may be an abbreviation of a channel measurement resource and may be configured by a parameter *resourcesForChannelMeasurement)* or one IMR (IMR may be an abbreviation of interference measurement resource and may be configured by a parameter csi-IM-*ResourcesForInterference* or *nzp-CSI-RS-ResourcesForInterference*) within *CSI-ReportConfig* configuration. For example, for CMR, CSI-RS resource set #1 and CSI-RS resource set #2 may be linked with each other, and the CSI-RS resources belonging to set #1 may include 16 antenna ports (AP), and CSI-RS resources belonging to set #2 may include 8 APs.
- Method #2: When there is one CSI-RS resource set linked to one CMR or one IMR in the CSI-ReportConfig configuration, the corresponding set includes one or more CSI-RS resources with different attributes such as the numbers of APs and/or power offset. For example, for CSI-RS resource set #1 configured with CMR, CSI-RS resource #1 belonging to set #1 may include 16 APs (or power offset #1 value is configured) and CSI-RS resource #1 belonging to the same set may include 8 APs (or power offset #2 value is configured).
- Method #3: When there is one CSI-RS resource set linked to one CMR or one IMR in the CSI-ReportConfig configuration, some or all CSI-RS resource(s) in the corresponding set may be configured to multiple APs and/or power offsets. For example, for CSI-RS resource set #1 configured to CMR, CSI-RS resource #1 belonging to set #1 may be configured to a maximum of 16 APs and CSI report using some of the AP(s) may be configured, or CSI-RS resource #2 belonging to the same set may be configured to configure CSI report using all or part of the power offset values.

Under the CSI framework described above, a CSI reporting method may be defined through at least one of the following options.
- Option #1: CSIs considering the number of multiple APs and/or multiple power offset values configured in one CSI report may all be included in one CSI report. Alternatively, CSIs considering the number of multiple APs and/or plurality of power offsets through the settings/instructions of the BS (in this case, the number of APs and/or power offsets configured/indicated through the BS are some of the number of APs and/or power offset values configured in the corresponding CSI report) may be included in one CSI report.
- Option #2: Even if multiple AP numbers and/or multiple power offset values are configured in one CSI report, CSIs considering the single AP number and/or single power offset through the configuration/instruction of the BS are included in one CSI report.
- Option #3: Even if multiple AP numbers and/or multiple power offset values are configured in one CSI report, CSIs considering the number of some APs and/or some power offsets may be included in one CSI report through determination/decision (by using criteria preconfigured or predefined by the BS).

L(>1) sub-configurations may be configured within the CSI-ReportConfig configuration, and each sub-configuration may correspond to one spatial or power domain adaptation pattern. Here, a spatial domain adaptation pattern can be corresponding to a specific antenna port (or antenna port on/off pattern) or a specific CSI-RS power value (e.g. CSI-RS power value determined by PowerControlOffsetSS parameter, which is a power offset value between SSS and CSI-RS. This is because, if some antenna elements corresponding to one antenna port are turned off, the CSI-RS power value may be affected). When Method #2 is applied, the spatial domain adaptation pattern may be configured differently for each sub-configuration by linking sub-configuration index #s1 with CSI-RS index #n1 and linking sub-configuration index #s2 with CSI-RS index #n2 when CSI-RS index #n1 (i.e., CSI-RS resource index #n1) belonging to a resource set is configured with the number of A1 APs (or P1 power value) and CSI-RS index #n2 belonging to the same set is configured with the number of A2 APs (or P2 power value). When Method #3 is applied, the spatial domain adaptation pattern may be configured differently for each sub-configuration by linking sub-configuration index #s1 with the number of A1 APs (or P1 power value) and linking sub-configuration index #s2 with the number of A2 APs, A2 is being less than A1 constituting CSI-RS index #n1, with sub-configuration index #s2 when CSI-RS index #n1 belonging to a resource set is configured with the number of A1 APs (or P1/P2 power value). The power domain adaptation pattern means that a power offset value (e.g., power offset value determined by a parameter *powerControlOffset,* which is a power offset value between PDSCH and CSI-RS, and a parameter *powerControlOffsetSS,* which is a power offset value between SSS and CSI-RS) changes. When Method #2 is applied, power domain adaptation pattern may be configured differently for each sub-configuration by linking sub-configuration index #s1 with CSI-RS index#n1 and linking sub-configuration #s2 with CSI-RS index #n2 when CSI-RS index #n1 belonging to a resource set is configured with a P2 power value and CSI-RS index #n2 belonging to the same set is configured with a P2 power value. When Method #3 is applied, a power domain adaptation pattern may be configured differently for each sub-configuration by linking sub-configuration index #s1 with a P1 power value and linking sub-configuration index #s2 to a P2 power value when CSI-RS index #n1 belonging to a resource set is configured with the P1 power value (and the P2 power value). A CSI report including CSIs corresponding to N (a value N which is equal to or greater than 1 and equal to or smaller than L) sub-configurations from among the corresponding L sub-configurations (by using one of the above Option #1/2/3 methods) may be fed back to the BS.

A description will be given below of some implementations of the present disclosure, in which when CSI reporting is indicated/configured for N sub-configuration(s) among L sub-configurations in a CSI report configuration, a CSI report is configured in a compressed or non-compressed manner, depending on the number or combination of the indicated/configured sub-configurations. In the present disclosure, CSI for a (CSI report) sub-configuration within a CSI report configuration may also be referred to as a CSI sub-report.

**<Implementation #1> When L sub-configurations are included in a CSI report configuration and a BS indicates/configures a UE to report CSI(s) for N (N ≤ L) sub-configuration(s) among the L sub-configurations, method for differently configuring reportQuantity included in a CSI report and/or a subband size (i.e., a granularity in the frequency domain for which CSI is reported) by a BS, according to values of N (e.g., N=1 and 1 < N ≤ L) or the sub-configuration(s) or their combination for which corresponding CSI(s) are included in the CSI report**
**<Implementation #1-1> Method for differently configuring reportQuantity and/or a subband size according to the number N (e.g., N=1 and 1 < N ≤ L) of sub-configurations for which corresponding CSI(s) are included in a CSI report**
The UE may be configured/indicated to configure and report, in a single CSI report, a plurality of CSIs corresponding to specific N sub-configurations among L sub-configurations included in a CSI report configuration. To enable the UE to report valid CSI that is useful for the BS to determine adaptation, while reducing a CSI payload size, reportQuantity (e.g., CRI-RI-PMI-CQI) to be included in the CSI report or a corresponding subband size may be configured in advance with a different value by a CSI report configuration (or sub-configuration) or directly indicated by (group-common) DCI that triggers a CSI report providing N CSIs (i.e., the N CSI sub-reports), based on the value of N. In the case of a direct indication through (group-common) DCI, one of a plurality of reportQuantity and/or subband size candidates that are configured in advance may be dynamically indicated.

For example, when a CSI report configuration includes L (=4) configurations #1, #2, #3, and #4, the types and composition of CSIs to be reported may be configured in advance through a CSI report configuration (or each sub-configuration) for each value of N, where N is a number of sub-configurations for which corresponding CSI is included in a CSI report, such as CRI-RI-PMI-CQI for N=1, CRI#1-RI#1-PMI#1-CQI#1 + CRI#2-RI#2-PMI#2-CQI#2 for N=2, CRI#1-RI#1-PMI#1-CQI#1 + CRI#2-RI#2-CQI#2 + CRI#3-RI#3-CQI#3 for N=3, and CRI#1-RI#1-PMI#1-CQI#1 + CRI#2-RI#2-CQI#2 + CRI#3-RI#3-CQI#3 for N=4.

A subband may be defined as N^{SB}_{PRB} contiguous PRBs, and a subband size may depend on the total number of PRBs within a bandwidth part (BWP) according to configurable subband sizes defined in Table 5.2.1.4-2 (see the following table) of 3GPP TS 38.214. In some implementations of the present disclosure, the subband size may be configured differently based on the value of N. For example, the UE may be configured with a subband size for CSI reporting by higher layer signaling, and the subband size may vary with the value N. For example, when, for N=1, a configured subband size for each BWP size is 4/8/16, for N=4, the UE may configure a CSI report by calculating CSIs using a subband size obtained by applying a preconfigured specific parameter (e.g., an offset or scaling factor) to the subband size configured for N=1. For example, for N=4, the UE may configure a CSI report by calculating CSIs using a subband size of 12/24/48 which is obtained by applying a scaling factor of 3 to the subband size of 4/8/16 configured for N=1 (e.g., using a subband size of 12 for a BWP size of 24 to 72 PRBs, 24 for 73 to 144 PRBs, and 48 for 145 to 175 PRBs). Alternatively, a separate table of configurable subband sizes may be defined for cases where N is not 1 (i.e., 1 < N ≤ L), or a subband size to be used for forming a CSI report may be configured separately for each value of N.

**Table 14**

| **Bandwidth part (PRBs)** | **Subband size (PRBs)** |
|---|---|
| 24 - 72 | 4, 8 |
| 73 - 144 | 8, 16 |
| 145 - 275 | 16, 32 |

**<Implementation #1-2> When there is no separate configuration/indication related to reportQuantity and/or a subband size based on the value of N (e.g., N=1 and N > 1, or N < L and N = L) within a CSI report sub-configuration (or (group-common) DCI), method for configuring a CSI report according to a legacy configuration (e.g., reportQuantity and/or a subband size in an existing CSI report configuration), or according to reportQuantity and/or a subband size in a preconfigured specific sub-configuration (or a sub-configuration with a lowest/highest index)**
When there is no separate configuration/indication related to reportQuantity and/or a subband size based on the value of N (e.g., N=1 and N > 1, or N < L and for N = L) within a CSI report configuration (or sub-configuration) or (group-common) DCI, the UE may configure and transmit a CSI report by always applying reportQuantity and subband size configured for a (legacy) single CSI to the CSI report configuration, regardless of the value of N. Assuming this, the BS may obtain or interpret CSI(s) (i.e., CSI sub-report(s)) in the CSI report received from the UE.

Alternatively, the CSI report may be configured and transmitted by applying reportQuantity and/or a subband size for a preconfigured specific sub-configuration (or the sub-configuration with the lowest/highest index). The lowest or highest sub-configuration index may be determined by a preconfiguration/indication from the BS or by a definition in the standards. This may mean the sub-configuration with the lowest or highest index among L sub-configurations configured in the CSI report configuration, or among N indicated sub-configurations for which CSIs are to be included in the CSI report.

For example, when it is indicated to include, in a CSI report, CSI for two sub-configuration indexes #3 and #5 out of the L sub-configurations configured in the CSI report configuration (i.e., it is indicated that a CSI report including CSI sub-reports according to sub-configurations with sub-configuration indexes #3 and #5 is to be transmitted), and it is preconfigured/indicated/defined to follow reportQuantity within the sub-configuration with the lowest index among the sub-configuration indexes for which CSIs (sub-reports) are to be included in the CSI report, the UE may configure and transmit a CSI report with CRI#3-RI#3-PMI#3-CQI#3 (CSI corresponding to sub-configuration index #3) and CRI#5-RI#5-PMI#5-CQI#5 (CSI corresponding to sub-configuration index #5) according to reportQuantity of CRI-RI-PMI-CQI configured by the sub-configuration with sub-configuration index #3.

**<Implementation #1-3> Method for, only when 1 < N ≤ L, configuring a CSI report by applying a corresponding configuration, and when N=1, configuring a CSI report according to reportQuantity and/or a subband size in a specific sub-configuration or a legacy configuration (e.g., reportQuantity and/or subband size in a legacy CSI report configuration), even when there is a separate configuration/indication related to reportQuantity and/or a subband size according to the value of N (e.g., for each of N=1 and N>1 or for each of N<L and N=L) in a CSI report sub-configuration (or (group-common) DCI)**
When reportQuantity is configured for each sub-configuration in the CSI report configuration, for example, even when there are separate reportQuantity-related configurations, such as CRI-RI-PMI-CQI for sub-configuration index #0, CRI-PMI-CQI for sub-configuration index #1, CRI-RI-CQI for sub-configuration index #2, and RI-CQI for sub-configuration index #3, the UE may still configure and transmit a CSI report in the same manner as Implementations #1 and #2 for N=1 (or when N<L), and by applying reportQuantity (or subband size) configured for each sub-configuration, only when 1 < N ≤ L (or only when N=L). Assuming this, the BS may obtain or interpret CSI(s) (i.e., CSI sub-report(s)) in the CSI report received from the UE.

**<Implementation #1-4> Method for configuring reportQuantity and/or a subband size differently based on a combination of sub-configurations (indexes) that are indicated to include corresponding CSIs (sub-reports) in a CSI report**
Different reportQunatity or subband size for CSI reporting may be configured according to the value of the number N of sub-configurations for which corresponding CSIs (sub-reports) are included in a CSI report, as in the afore-described implementation(s). Additionally, different reportQunatity or subband size for CSI reporting may also be configured or regulated for each combination of sub-configuration indexes (of CSIs) for CSI reporting. For example, when L (=4) sub-configuration indexes are configured (by a CSI report configuration), combinations such as comb#1={0,1,2,3}, comb#2={0,1}, comb#3={1,2}, and comb#4={2,3} (where the numbers in parentheses refer to sub-configuration indexes) may be configured together with or in addition to the value of N. It may be configured or defined that a different reportQuantity and/or subband size is applied depending on which combination is configured/indicated to be included in an actual CSI report. Alternatively, a sub-configuration index corresponding to CSI (or a sub-report) included in a CSI report may also be directly configured/indicated by a bitmap. For example, when a bitmap [0 1 1 0] is configured or indicated, the UE and the BS may interpret that sub-configuration indexes 1 and 2 (i.e., a CSI sub-report for sub-configuration index 1 and a CSI sub-report for sub-configuration index 2) are configured/indicated to be reported by a CSI report.

In some implementations, when a combination of two sub-configurations corresponding to different power offset values for the same CSI-RS resource are configured/indicated to be reported by a CSI report, a CRI, a PMI, and an RI may be configured as a common/shared reportQuantity to reduce a payload size. Accordingly, the CSI report may include CRI/PMI/RI+CQI#1+CQI#2, where CQI#1 is based on the power offset value of one of the two sub-configurations and CQI#2 is based on the power offset value of the other of the two sub-configurations. Similarly, although N=2, that is, a combination of two sub-configurations corresponding to different spatial adaptation patterns for the same CSI-RS resource are configured/indicated for CSI reporting, CRI/RI+PMI#1+CQI#1+PMI#2+CQI#2 may be configured in a CSI report, where PMI#1 and CQI#1 are based on the spatial adaptation pattern of the two sub-configurations, and PMI#2 and CQI#2 based on the spatial adaptation pattern of the other of the two sub-configurations. The afore-described examples (examples related to the case where power offset values or spatial adaptation patterns are different) may be exemplary CSI report configuration methods when only CSI Part 1 is transmitted in a case where it is configured such that a CSI report include a wideband PMI and CQI. If a subband PMI/CQI report is configured, such as by pmi-FormatIndicator-subbandPMI or cqi-FormatIndicator=subbandCQI, a CSI report may be configured to include CRI#1 - RI#1 - CQI#1 (codeword#1) - NZBI#1 + CRI#2 - RI#2 - CQI#2 (codeword#1) - NZBI#2 in CSI Part 1 and PMI#1 + CQI#1 (codeword#2) + PMI#2 + CQI#2 (codeword#2) in CSI Part 2. Herein, CSI#1 and CSI#2 respectively represent CSI values corresponding to sub-configurations with different power offset values or spatial adaptation patterns. For example, CQI#1 (codeword#1), which is a CQI for codeword #1, may be based on one of two sub-configurations, while CQI#2 (codeword#2), which is a CQI for codeword #2, may be based on the other of the two sub-configurations. NZBI means an "indication of the number of non-zero wideband amplitude coefficients per layer," and NZBI may be omitted depending on a codebook type or configuration.

In the aforementioned implementations, (1) when CSI calculated for each of sub-configurations, which are indicated for including their corresponding CSIs (sub-reports) in a CSI report, is included in a CSI report, reportQuantity may be configured/indicated to be common (or shared) or differential. For example, when N=2 is configured/indicated, and a common CRI and RI, separate PMIs, and differential CQI values may be included in a CSI report, a sub-configuration for which CQI value is used as a baseline/reference value may be preconfigured/indicated out of two sub-configurations, and a sub-configuration for which CSI is used as a baseline/reference value for reportQuantity configured to be common/shared may also be preconfigured/indicated. For example, a baseline/reference sub-configuration index (or spatial adaptation pattern value and/or power offset value) may be preconfigured. If there is no separate configuration, the sub-configuration with the lowest/highest sub-configuration index (herein, a sub-configuration index may mean one of N sub-configurations indicated for actual CSI reporting) may be considered to be the baseline/reference one.

Further, as reportQuantity is configured to be common (or shared) or differential, the order of CSI values in a CSI report may also be preconfigured/indicated. For example, when for N=2, a CSI report is configured without a common/differential configuration, the CSI values may be included in the CSI report in the order of CRI#1-RI#1-PMI#1-CQI#1 + CRI#2-RI#2-PMI#2-CQI#2. However, the order in the CSI report may change to common CRI - common RI - PMI#1 - PMI#2 - CQI#1 - differential CQI for CQI#2 according to the preconfiguration/indication. The above-described example may be an exemplary method for configuring a CSI report, when only CSI Part 1 is transmitted in the case where a single CSI report is configured to include a wideband PMI and CQI. If subband PMI/CQI reporting is configured, for example, by pmi-FormatIndicator=subbandPMI or cqi-FormatIndicator=subbandCQI, then common CRI - common RI - CQI#1 (codeword#1) - differential CQI#2 (codeword#1) - NZBI#1 - differential NZBI#2 may be configured in CSI Part 1, andPMI#1+PMI#2+CQI#1 (codeword#2) + differential CQI#2 (codeword#2) may be configured in CSI Part 2. Differential CQI#2 (codeword#1), which is differential CQI#2 for codeword#1, may be a value representing the difference between CQI#1 (codeword#1) and CQI#2 (codeword#1) for codeword #1. Differential CQI#2 (codeword#2), which is differential CQI#2 for codeword#2, is a value representing the difference between CQI#1 (codword#2) and CQI#2 (codeword#2) for codeword #2. Differential NZBI#2 is a value that indicates the difference between NZBI#2 and NZBI#1.

The above-described method for configuring a CSI report may be generalized as follows. Common/shared information may be located first, followed by separate information, and then differential information. This configuration order may be changed based on a configuration/indication from the BS or a definition in the standards.

A CRI is used for the UE to indicate its preferred beam or a CSI-RS resource used to calculate an RI, a PMI, a CQI, an LI, and so on reported by a CSI report. Because the RI, PMI, CQI, and LI are calculated conditioned on the CRI, the BS should know CSI-RS resources based on which the RI, PMI, CQI, and LI are calculated to figure out a channel state. According to 3GPP TS 38.212, a CRI is configured based on log₂(K_s) in the CSI report, where K_s is the number of CSI-RS resources. That is, referring to Section 6.3.1.1.2 in 3GPP TS 38.212 Rel-17, the bitwidth of the CRI field is ceil{log₂(K^{CSI-RS}ₛ)}, where K^{CSI-RS}ₛ is the number of CSI-RS resources in a corresponding resource set. In this case, the UE may indicate, to the BS, one of K^{CSI-RS}ₛ CSI-RS resources within a CSI resource set, for which a CSI report is configured or triggered, by the CRI field with the bitwidth of ceil{log₂(K^{CSI-RS}ₛ)}. As in some implementations of the present disclosure, when L sub-configurations are configured and N sub-configurations for which corresponding CSIs are to be included in a single CSI report are configured/indicated, the bitwidth of the CRI field may be calculated by substituting K_s (i.e., the value of K^{CSI-RS}ₛ in 3GPP TS 38.212) with the number of CSI-RSs (i.e., the number of CSI-RS resources) within a sub-configuration (or the number of CSI-RSs (i.e., the number of CSI-RS resources) related to the sub-configuration). In this case, the number of resources may be different for each sub-configuration, and if a sub-configuration has only one CSI-RS resource, its CRI may be omitted. According to 3GPP TS 38.212 Rel-17, a single CSI report corresponds to one CSI report configuration, and includes up to one CRI field. In contrast, according to some implementations of the present disclosure, a single CSI report configuration may include L CSI sub-configurations, and a single CSI report corresponding to the CSI report configuration may include M CSI sub-reports corresponding to M sub-configurations among the L sub-configurations according to a configuration/indication from the BS. Therefore, according to some implementations of the present disclosure, a CSI report corresponding to a single CSI report configuration may include a CRI field in each of the M CSI sub-reports (if the number of related CSI-RS resources is not one).

**<Implementation #2> When CSI reporting for N sub-configuration(s) among L sub-configurations configured in a CSI report configuration is indicated, method for directly indicating sub-configuration indexes corresponding to CSIs included in a CSI report through a bitmap by a UE to prevent a mismatch with a BS regarding the sub-configurations for which corresponding CSIs are included in the CSI report**
The UE may be configured/indicated to report, in a single CSI report, CSI(s) corresponding to N sub-configuration(s) among L sub-configurations within a CSI report configuration by (group-common) DCI or a MAC control element (or RRC signaling in the case of periodic CSI-RS reporting). However, when the UE fails to receive the CSI reporting indication from the BS, a mismatch may occur between the BS and the UE regarding the CSIs included in the CSI report transmitted by the UE. Accordingly, when the UE reports CSIs for a plurality of sub-configurations in a single CSI report, the UE may directly indicate sub-configuration indexes for which CSIs are included in the CSI report by a bitmap, and the CSI report may be configured by including the bitmap in either CSI Part 1 or CSI Part 2.

Additionally or alternatively, to reduce the size more compared to the bitmap, K sub-configuration index combinations that may be included in the CSI report may be preconfigured, and the CSI report may indicate which combination it corresponds to among the K sub-configuration index combinations available for the current CSI report. For example, when combinations, such as comb#1={0,1,2,3}, comb#2={0,1}, comb#3={1,2}, comb#4={2,3}, comb#5={0}, comb#6={1}, comb#7={2}, and comb#8={3} (where the numbers within { } represent sub-configurations indexes) are configured (by a CSI repot configuration), the UE may report a combination for which the CSI report is configured among the 8 combinations by 3-bit information, or report whether N=1 or N=L simply by 1-bit information.

Alternatively, only a sub-configuration index value may be reported simply. For example, if L=4, sub-configuration indexes for which CSIs are included in the CSI report may be directly indicated by 2 bits. For example, if index #0 is indicated in the CSI report, it may mean that CSIs for all sub-configurations (of the CSI report configuration) are included in the CSI report (i.e., N=L). If sub-configuration index #1, #2, or #3 is indicated by the CSI report, it may mean that the CSI report is a single CSI report including CSI for that sub-configuration index only. Alternatively, when specific sub-configuration index #n is indicated by the CSI report, it may mean that CSI(s) for all sub-configuration(s) of index(es) corresponding to n or higher (or lower) are included in the CSI report.

In some implementations of the present disclosure, a parameter reportFreqConfiguration indicating whether a CQI and a PMI are for a wideband or a subband (or wideband+subband) may be included in a sub-configuration of a CSI report configuration. Conventionally (e.g., in the case of a CSI report configuration without any sub-configuration), when a PMI and/or a CQI is for a wideband, a CSI report is configured and transmitted by including the PMI and/or the CQI in CSI Part 1. However, when a wideband or a subband is configured on a sub-configuration basis, the configuration may be different for each sub-configuration. In this case, when PMIs and/or CQIs are configured for a wideband for all sub-configuration indexes (for CSIs) for forming a CSI report, the CSI report is configured and transmitted by including the PMIs and/or the CQIs in CSI Part 1 in the same manner as the conventional case (e.g., a CSI report configuration without any sub-configuration). However, when a subband CQI and/or PMI is configured in at least one sub-configuration, it may be considered that all wideband CSIs for sub-configurations are configured in CSI Part 2 (or CSI Part 1).

Implementations #1 and #2 may be applied independently or together.

According to some implementations of the present disclosure, the BS may perform spatial or power domain adaptation for NES, based on a CSI report which includes CSI(s) based on CSI report sub-configuration(s). According to some implementations of the present disclosure, the likelihood of a mismatch between the BS and the UE regarding the interpretation of a CSI report used for NES may be decreased. According to some implementations of the present disclosure, the decoding complexity of a CSI report at the BS may be reduced.

FIG. 9 illustrates a flow of CSI report transmission at a UE according to some implementations of the present disclosure.

The UE may perform operations according to some implementations of the present disclosure in association with transmission of CSI report. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non- transitory) storage medium and causing, when executed, (at least one processor) to perform operations according to some implementations of the present disclosure.

The method performed by the UE, or the operations in the UE, the processing device, the (non-transitory) computer-readable storage medium, and/or the computer program product may include receiving a CSI report configuration including L CSI report sub-configurations, each including a list of CSI resources, where L is an integer greater than 1 (S901), receiving an indication of CSI reporting for N CSI report sub-configurations among the L CSI report sub-configurations, where N is an integer greater than 1 and not greater than L (S903), and transmitting a CSI report including CSI sub-reports respectively corresponding to the N CSI report sub-configurations (S905). Each of the CSI sub-reports may include a CRI field based on log₂(K_s), where K_s is the number of CSI-RS resources based on a corresponding CSI report sub-configuration.

In some implementations, the CSI field may have a size of ceil{log₂(K_s)}.

In some implementations, a CSI sub-report for a CSI report sub-configuration in which the number of CSI-RS resources is 1 among the N CSI report sub-configurations may not include the CRI field.

In some implementations, the CSI report configuration may include a CRI as a report quantity.

In some implementations, each of the L CSI report sub-configurations may include information regarding an antenna port related to a corresponding CSI-RS resource.

In some implementations, each of the L CSI report sub-configurations may include power-related information related to a corresponding CSI-RS resource.

FIG. 10 illustrates a flow of CSI report reception at a BS according to some implementations of the present disclosure.

The BS may perform operations according to some implementations of the present disclosure in association with reception of CSI report. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

The method performed by the BS, or the operations in the BS, the processing device, the (non-transitory) computer-readable storage medium, and/or the computer program product may include transmitting a CSI report configuration including L CSI report sub-configurations, each including a list of CSI resources, where L is an integer greater than 1 (S1001), transmitting an indication of CSI reporting for N CSI report sub-configurations among the L CSI report sub-configurations, where N is an integer greater than 1 and not greater than L (S1003), and receiving a CSI report including CSI sub-reports respectively corresponding to the N CSI report sub-configurations (S1005). Each of the CSI sub-reports may include a CRI field based on log₂(K_s), where K_s is the number of CSI-RS resources based on a corresponding CSI report sub-configuration.

In some implementations, the CSI field may have a size of ceil{log₂(K_s)}.

In some implementations, a CSI sub-report for a CSI report sub-configuration in which the number of CSI-RS resources is 1 among the N CSI report sub-configurations may not include the CRI field.

In some implementations, the CSI report configuration may include a CRI as a report quantity.

In some implementations, each of the L CSI report sub-configurations may include information regarding an antenna port related to a corresponding CSI-RS resource.

In some implementations, each of the L CSI report sub-configurations may include power-related information related to a corresponding CSI-RS resource.

In some implementations, based on the second report quantity including an RI, the CSI report may include an RI value for each of the plurality of sub-configurations.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method for transmitting a channel state information (CSI) report by a user equipment (UE) in a wireless communication system, the method comprising:
receiving a CSI report configuration including L CSI report sub-configurations, each including a list of CSI resources, where L is an integer greater than 1;
receiving an indication of CSI reporting for N CSI report sub-configurations among the L CSI report sub-configurations, where N is an integer greater than 1 and not greater than L; and
transmitting a CSI report including CSI sub-reports respectively corresponding to the N CSI report sub-configurations,
wherein each of the CSI sub-reports includes a CSI reference signal (CSI-RS) resource indicator (CRI) field based on log₂(K_s), where K_s is the number of CSI-RS resources based on a corresponding CSI report sub-configuration.

2. The method of claim 1, wherein the CSI field has a size of ceil{log₂(K_s)}.

3. The method of claim 1, wherein a CSI sub-report for a CSI report sub-configuration in which the number of CSI-RS resources is 1 among the N CSI report sub-configurations does not include the CRI field.

4. The method of claim 1, wherein the CSI report configuration includes a CRI as a report quantity.

5. The method of claim 1, wherein each of the L CSI report sub-configurations includes information regarding an antenna port related to a corresponding CSI-RS resource.

6. The method of claim 1, wherein each of the L CSI report sub-configurations includes power-related information related to a corresponding CSI-RS resource.

7. A user equipment (UE) for transmitting a channel state information (CSI) report in a wireless communication system, the UE comprising:
at least one transceiver;
at least one processor; and
at least one computer memory operably connected to the at least one processor and storing instructions which, when executed, cause the at least one processor to perform operations comprising:
receiving a CSI report configuration including L CSI report sub-configurations, each including a list of CSI resources, where L is an integer greater than 1;
receiving an indication of CSI reporting for N CSI report sub-configurations among the L CSI report sub-configurations, where N is an integer greater than 1 and not greater than L; and
transmitting a CSI report including CSI sub-reports respectively corresponding to the N CSI report sub-configurations, and
wherein each of the CSI sub-reports includes a CSI reference signal (CSI-RS) resource indicator (CRI) field based on log₂(K_s), where K_s is the number of CSI-RS resources based on a corresponding CSI report sub-configuration.

8. A processing device in a wireless communication system, the processing device comprising:
at least one processor; and
at least one computer memory operably connected to the at least one processor and storing instructions which, when executed, cause the at least one processor to perform operations comprising:
receiving a channel state information (CSI) report configuration including L CSI report sub-configurations, each including a list of CSI resources, where L is an integer greater than 1;
receiving an indication of CSI reporting for N CSI report sub-configurations among the L CSI report sub-configurations, where N is an integer greater than 1 and not greater than L; and
transmitting a CSI report including CSI sub-reports respectively corresponding to the N CSI report sub-configurations, and
wherein each of the CSI sub-reports includes a CSI reference signal (CSI-RS) resource indicator (CRI) field based on log₂(K_s), where K_s is the number of CSI-RS resources based on a corresponding CSI report sub-configuration.

9. A computer-readable storage medium storing at least one program code including instructions which, when executed, cause at least one processor to perform operations comprising:
receiving a channel state information (CSI) report configuration including L CSI report sub-configurations, each including a list of CSI resources, where L is an integer greater than 1;
receiving an indication of CSI reporting for N CSI report sub-configurations among the L CSI report sub-configurations, where N is an integer greater than 1 and not greater than L; and
transmitting a CSI report including CSI sub-reports respectively corresponding to the N CSI report sub-configurations, and
wherein each of the CSI sub-reports includes a CSI reference signal (CSI-RS) resource indicator (CRI) field based on log₂(K_s), where K_s is the number of CSI-RS resources based on a corresponding CSI report sub-configuration.

10. A method for receiving a channel state information (CSI) report from a user equipment (UE) by a base station (BS) in a wireless communication system, the method comprising:
transmitting a CSI report configuration including L CSI report sub-configurations, each including a list of CSI resources, where L is an integer greater than 1;
transmitting an indication of CSI reporting for N CSI report sub-configurations among the L CSI report sub-configurations, where N is an integer greater than 1 and not greater than L; and
receiving a CSI report including CSI sub-reports respectively corresponding to the N CSI report sub-configurations,
wherein each of the CSI sub-reports includes a CSI reference signal (CSI-RS) resource indicator (CRI) field based on log₂(K_s), where K_s is the number of CSI-RS resources based on a corresponding CSI report sub-configuration.

11. A base station (BS) for receiving a channel state information (CSI) report from a user equipment (UE) in a wireless communication system, the BS comprising:
at least one transceiver;
at least one processor; and
at least one computer memory operably connected to the at least one processor and storing instructions which, when executed, cause the at least one processor to perform operations comprising:
transmitting a CSI report configuration including L CSI report sub-configurations, each including a list of CSI resources, where L is an integer greater than 1;
transmitting an indication of CSI reporting for N CSI report sub-configurations among the L CSI report sub-configurations, where N is an integer greater than 1 and not greater than L; and
receiving a CSI report including CSI sub-reports respectively corresponding to the N CSI report sub-configurations, and
wherein each of the CSI sub-reports includes a CSI reference signal (CSI-RS) resource indicator (CRI) field based on log₂(K_s), where K_s is the number of CSI-RS resources based on a corresponding CSI report sub-configuration.

12. The BS of claim 11, wherein the CSI field has a size of ceil{log₂(K_s)}.

13. The BS of claim 11, wherein a CSI sub-report for a CSI report sub-configuration in which the number of CSI-RS resources is 1 among the N CSI report sub-configurations does not include the CRI field.

14. The BS of claim 11, wherein the CSI report configuration includes a CRI as a report quantity.

15. The BS of claim 11, wherein each of the L CSI report sub-configurations includes information regarding an antenna port related to a corresponding CSI-RS resource.

16. The BS of claim 11, wherein each of the L CSI report sub-configurations includes power-related information related to a corresponding CSI-RS resource.
